# EUROPEAN PATENT APPLICATION

(11) **EP 3 078 504 A1**
(43) Date of publication of application: **12.10.2016**
(21) Application number: 14867232.2
(22) Date of filing: 01.12.2014
(51) Int. Cl.: B60B 31/02

(54) **SPOKED WHEEL ALIGNERS AND METHOD FOR ALIGNING SPOKED WHEELS USING SAID ALIGNER**

(30) Priority: 04.12.2013 ES 201331776
(71) Applicant: Aimcore Co., Ltd, Teipei 10357 (TW)
(72) Inventor: MAISTERRA, Alfonso Martin, 31500 Tudela (Navarra) (ES)
(74) Representative: Cabinet Plasseraud
(86) International application number: PCT/ES2014/070883
(87) International publication number: WO 2015/082742

(57) **Abstract**

The invention relates to a spoked wheel aligner and to a method for aligning spoked wheels using said aligner, formed by a box body (3) containing a longitudinally mobile rod (4) which protrudes outside said body, the end of said rod (4) being provided with a disk (5) having a system for detecting the angular position thereof, while the rod (4) has a system for detecting the position of the longitudinal movement thereof, such that by supporting the disk (5) on a side or on the periphery of the rim of a wheel, according to the rotation of said disk (5) and the longitudinal movements of the rod (4) the areas of the wheel which are laterally misaligned or present a deviation from roundness are determined in order to correct same.

## Description

### Field of the Art

The present invention relates to operations for the maintenance of bicycles or similar means, proposing a device which allows aligning spoked wheels in a quick, simple and precise manner by means of a practical and easy-to-apply method.

### State of the Art

Spoked wheels used in bicycles and other means movable by rolling, usually comprise a tire assembled on a rim which is supported by a series of spokes from a central hub, the spokes being attached at one end to the rim and at the other end alternately to either side of the assembly on the central hub of the wheel.

In that assembly, the end of the spoke which is attached to the rim is conventionally threaded, where a bolt-like element is arranged abutting against the inner face of the rim and going through same to the outer part where the corresponding spoke is coupled, such that by means of tightening or loosening said threaded element it is possible to apply more or less tension on the corresponding spoke, whereby causing lateral movement of the rim towards one side or the other in the spoke attachment area.

The wheels must be perfectly round and perfectly contained in a plane perpendicular to the hub for correct operation while rolling and so that the associated elements, such as brakes, odometers, dynamos, etc., can work correctly, for which purpose there is a need to perform wheel adjustment alignment by means of the combined tensing of all its spokes, there being a need to perform said alignment periodically to correct the misalignments that occur in the wheels with use, due to the spokes becoming loose or the longitudinal variation thereof as a result of expansion.

The main difficulty in performing a correct wheel alignment is the precise detection of the degree of misalignment of each area of the circumferential contour of the wheel, being able to perform said detection visually, for example, by checking the areas of the rim rubbing against the brake pads or any other element used as reference. This system is very simple and can be performed by any user without needing specific tools for said function, but it is very difficult to achieve a correct wheel alignment with this method as it provides very little precision.

There are specific tools for aligning spoked wheels, formed by a support with two blocks that close like a pair of scissors to a reduced proximity on both sides of the rim of the wheel to be aligned, such that by rotating the wheel the areas of the rim touching one of the blocks of the tool are checked and by acting on the spokes of those areas the lateral deviations are gradually corrected, until no area of the rim touches the blocks of the tool upon rotating the wheel. This allows aligning the wheels in a more precise manner than with the reference of brake pads or other elements which can change position, but the alignment is still very laborious and slow, the result furthermore being highly dependent on the skill and experience of the person performing the alignment operation.

There are also systems which allow aligning spoked wheels automatically, such as the system presented in patent document US 8235084, which has a motor for rotating the wheel to be aligned and distance sensors formed by laser curtain meters, so the system is very expensive. Furthermore, in the embodiment thereof this system is implemented in an assembly which conditions the way of use, limiting the possibilities of use.

### Object of the Invention

The present invention proposes a spoked wheel aligning device, which allows performing alignment in a quick and simple manner, leaving the wheel with an optimum degree of alignment.

This aligning device object of the invention comprises a box body containing a longitudinally mobile rod which protrudes outside said body, said rod incorporating at the end a disk arranged in relation to detectors for detecting the position of rotation thereof, while there is in turn arranged in relation to the rod a detector for detecting the longitudinal movement thereof, all of this linked, through an electronic module, with control buttons, a data display screen and luminous markers, acting as a user interface. In relation to the functional assembly, the incorporation of a battery for power supply, housed inside the box body, and an electrical connector for external connection is furthermore envisaged.

The electronic module associated with the functional assembly allows establishing communication with a computer program running in an external system, such as a computer, a mobile telephone or another similar apparatus, said program being able to collect and analyze data generated by the wheel aligning device, in order to provide a report with the alignment values of the wheel on which the alignment is performed and offer a more convenient display.

For the use of this wheel aligning device object of the invention, the body of the device is coupled with respect to a support securely attached to the bicycle or means bearing the wheel to be aligned, or coupled with respect to a fixed workshop support, on which the wheel to be aligned is assembled, such that by adjusting the position of the aligning device in relation to the wheel to be aligned and by rotating the wheel, the device provides information accurately showing the state of alignment of each area of the circumferential contour of the wheel, for performing the necessary correction adjustments by acting on the spokes corresponding to the areas exceeding misalignment limits.

Information from the aligning device, with respect to the wheel to be aligned, is shown by means of exhibiting data on the display screen and with indications of the luminous markers of the device, being able to obtain a graphic continuously depicting the alignment during the operation and a note showing the result, and being able to store the alignment data by means of communication with an external computer program.

The box body of the aligning device furthermore contains laser emitters, which project light beams on a plane parallel to the disk of the end of the mobile rod, such that a reference in relation to the wheel to be aligned can be determined with said light beams, so that said disk of the end of the mobile rod of the aligning device remains perfectly tangent to the circumference of the rim of the wheel to be aligned, so that the aligning device provides accurate information about the alignment in relation to the wheel to be aligned. On the other hand, by means of the light beams of the mentioned laser emitters, a reference can in turn be established to check the roundness of the wheel of application of the alignment.

The aligning device itself can also be used for measuring the roundness of wheels with precision, arranging it radially in contact with the periphery of the rim of the wheel to be checked; there being envisaged, in that sense, the combination of the aligning device and an accessory device of the same type capable of detecting variations in a contact continuously supported on the rim of the wheel, arranging one of the devices in a perpendicular manner with respect to one side of the rim and the other device in a radial position on the periphery of the rim; being able to connect the two devices to one another for jointly processing the data provided by both, so the lateral deviations and the roundness of the wheel are measured in a single operation.

This being the case, the aligning device can also be used for other functions, such as for measuring the state of the brake discs, for the purpose of detecting deformations or bends which can be rectified for the bicycle or vehicle incorporating said brakes to work better.

The proposed device can also be used by means of manually rotating the wheel to be aligned, such that it does not incorporate a motor for that function, which makes it lighter in weight and more cost-effective; using a contact sensor for detecting the misalignments of the wheels, making it very precise with simple and cost-effective functional means; and it is furthermore adaptable for being used by means of fastening on different types of supports, even on the actual forks for assembling wheels in bicycles or similar vehicles, without the need to disassemble the wheels.

Based on the foregoing, said spoked wheel aligning device object of the invention has very advantageous features for its intended function, being novel and preferred with respect to conventional means and systems being used for the function of aligning spoked wheels of bicycles or other rolling apparatus.

### Description of the Drawings

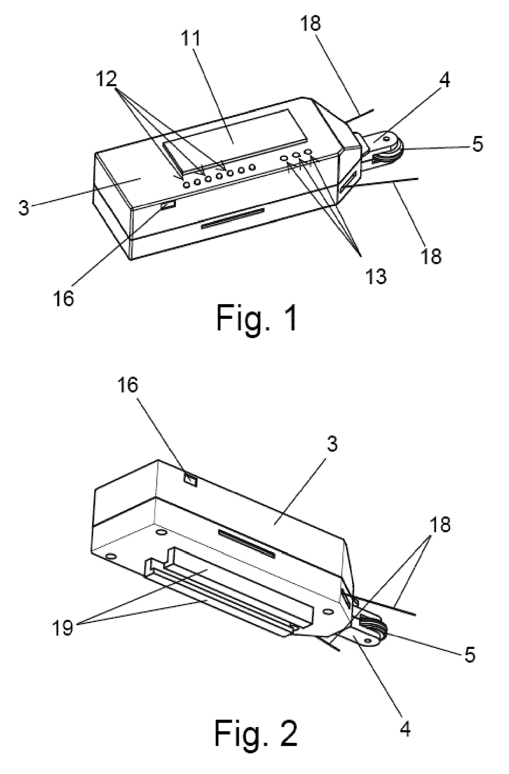

Figure 1 shows a front perspective view of a wheel aligning device according to the invention.
Figure 2 shows a rear perspective view of the same wheel aligning device of the preceding figure.

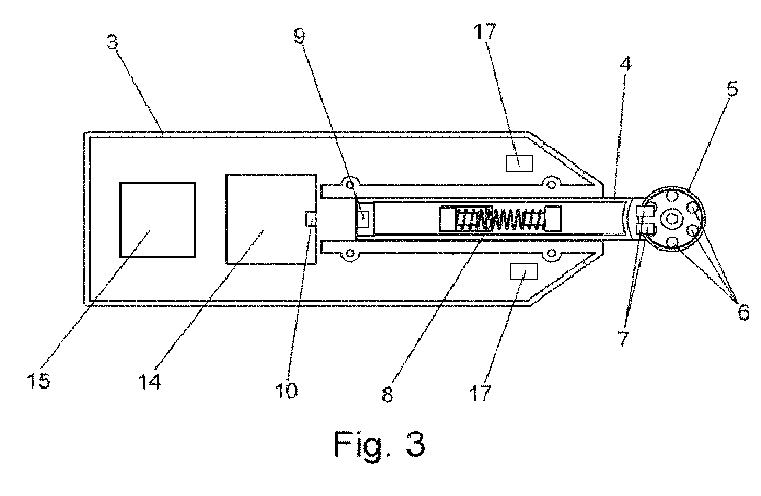

Figure 3 shows a schematic section of the wheel aligning device according to the invention, the elements housed inside the box body being seen.
Figure 4 shows a perspective view of an example of applying the wheel aligning device assembled on a fixed workshop support.
Figure 5 shows a perspective view of an example of applying the aligning device in relation to a bicycle wheel, by means of assembling in a support incorporated on the bicycle itself.
Figure 6 is an enlarged detail of the wheel where the aligning device in the preceding figure is placed.
Figure 7 shows a perspective view of an example of applying the aligning device in combination with a similar accessory device for simultaneously measuring the lateral deviations and roundness of a wheel.

### Detailed Description of the Invention

The present invention relates to a device for aligning spoked wheels (1) of bicycles (2) or other rolling means, the aligning device comprising a box body (3) containing a longitudinally mobile rod (4) which protrudes outside said body, said rod (4) incorporating at the end a disk (5) which can rotate freely.

The disk (5) has any system for detecting position, for example, by means of magnets (6) distributed according to the circumferential contour of the disk (5), in combination with magnetic sensors (7) arranged in the rod (4), whereby when the magnets (6) pass in front of the sensors, they will act as detectors for detecting the position of rotation of the disk (5). This solution of the system for detecting the position of the disk (5) is not limiting, and any other system which allows detecting the angular position of said disk (5) during the rotation thereof, for example, contact encoders, optical systems, etc., can be provided.

The rod (4) is arranged in a longitudinally sliding assembly, pushed by a spring (8) that tends to move it out of the box body (3), with a stop limiting movement in that direction, said rod (4) having a system for detecting the position of the longitudinal movement thereof, for example, by means of a magnet (9) arranged in the rear part of the rod (4), in a position facing a magnetic field sensor (10) securely located in the box body (3), such that said sensor (10), depending on the distance of the magnet (9) with respect to it, behaves like a detector for detecting the position of the longitudinal movement of the rod (4). This solution for detecting the position of the rod (4) is not limiting either, and any other system which allows detecting the position of movement of said rod (4), for example, with optical means, can be provided.

Indicating and control means are arranged in relation to the mentioned functional assembly of the aligning device, and can comprise, for example, a data display screen (11), a series of luminous markers (12) and command buttons (13) for controlling the operation of the device, all of this linked with an electronic module (14) arranged inside the box body (3). The screen (11) can be a touch screen and can itself be used as commanding means, without it being necessary to have independent buttons (13) for the command function. Likewise, the screen (11) can integrate functions of depicting and/or indicating the operation of the aligning device, without it being necessary to have independent luminous markers (12) for displaying the operating procedure. Nevertheless, the aligning device can be implemented with any combination of the mentioned indicating and control means, without this altering the object of the invention.

There is furthermore envisaged in the box body (3) itself the arrangement of a battery (15) for supplying power to the functional assembly, a connector (16) also being arranged for connection of the functional equipment to an external power supply.

The electronic module (14) incorporates an application which allows establishing communication with a computer program run in an external system, such as a computer, a mobile telephone or another similar apparatus, which allows collecting alignment data provided by the device in relation to a wheel (1) on which the alignment operation is applied, which allows displaying in a graphic the development of the alignment of the wheel (1) of application, storing the result and providing a report thereof.

There are also arranged in the box body (3) laser emitters (17), which emit light beams (18) that are projected outwards through both sides of the rod (4) on a plane parallel to the disk (5) of the end of said rod (4), being able to determine a reference in relation to the wheel (1) to be aligned with those light beams (18), so that the disk (5) of the end of the rod (4) is located perfectly tangent to the circumferential contour of the rim of said wheel (1) to be aligned, so that the information about the alignment provided by the aligning device is completely accurate in relation to the wheel (1) of application of the alignment. The light beams (18) also allow determining, with the aligning device itself, a reference for checking the roundness of the wheel (1) of application.

Furthermore, the box body (3) has on its outside formations (19) for fastening the aligning device on an assembly support in the use of application, said formations (19) being, for example, opposing profiles having an L-shaped section, whereby assembling by way of fastening through insertion with respect to reciprocal guides of the assembly support can be carried out, without this embodiment being limiting.

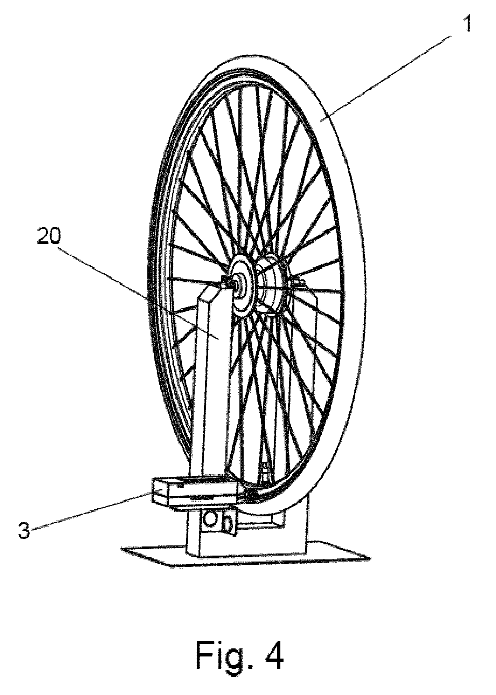

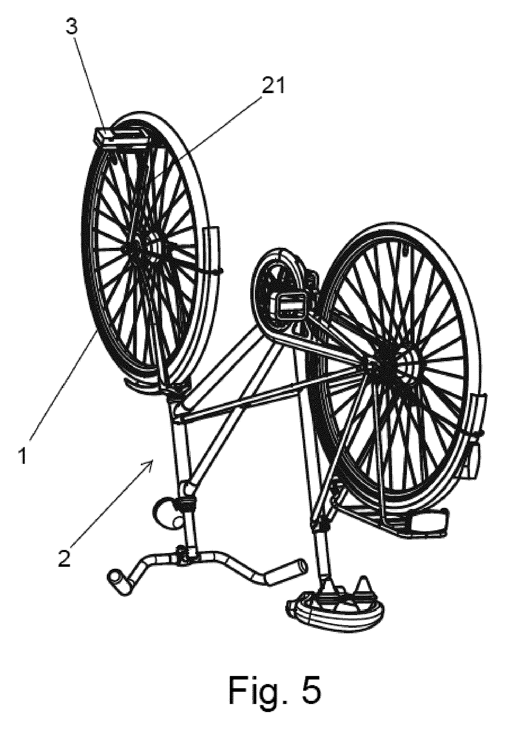

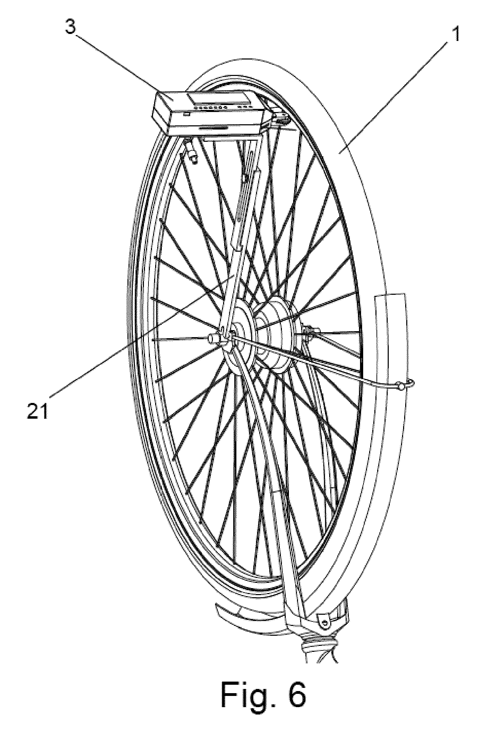

The assembly of application can thereby be carried out by arranging the aligning device on a fixed workshop support (20), on which the wheel (1) to be aligned is assembled, as seen in Figure 4; or by arranging the aligning device on a support (21) which is assembled on the actual bicycle (2) or vehicle bearing the wheel (1) to be aligned, without disassembling said wheel (1) from its arrangement in the bicycle (2) or corresponding vehicle, as seen in Figures 5 and 6.

This being the case, for the use of application the aligning device is arranged on a fixed support (20) incorporating the wheel (1) to be aligned, or on a support (21) which is assembled in the bicycle (2) or vehicle bearing the wheel (1) to be aligned, placing said aligning device such that the disk (5) is supported on one side of the rim of the wheel (1), with the rod (4) retracted inwards against the spring (8) until about half the path of longitudinal movement thereof.

Once the foregoing has taken place, the aligning device is activated by means of the corresponding command button (13) and the wheel (1) is rotated, whereby, as a result of the forward and backward movements of the rod (4) as it tracks the side surface of the rim of the wheel (1), the device determines, by means of the system for detecting the position of movement of the rod (4), the misalignments which the wheel (1) has towards one side or the other in each area of its circumferential contour, while it determines, by means of the system for detecting the angular position of the disk (5), the area of the circumferential contour of the wheel (1) corresponding to each deviation.

Data concerning the detected misalignments is shown on the display screen (11), and signals corresponding with said misalignments are shown by means of the operation indicators, for example, by means of the luminous markers (12) on the sides of a central luminous marker (12) lighting up in red, said central luminous marker (12) lighting up in green when the alignment is correct, allowing the user to gradually adjust each misaligned area, until achieving the correct alignment of the wheel (1) in its entirety. The indication of the operation of aligning the wheel (1) of application can also be shown on the display screen (11) by means of a graph and/or by means of luminous indicating points.

By means of communication with an external computer system, by means of the electronic module (14), information about the misalignments can also be shown in a graphic of the circumferential development of the wheel (1) of application, which allows tracking the progress of alignment with precision, as well as storing the result and obtaining a report thereof.

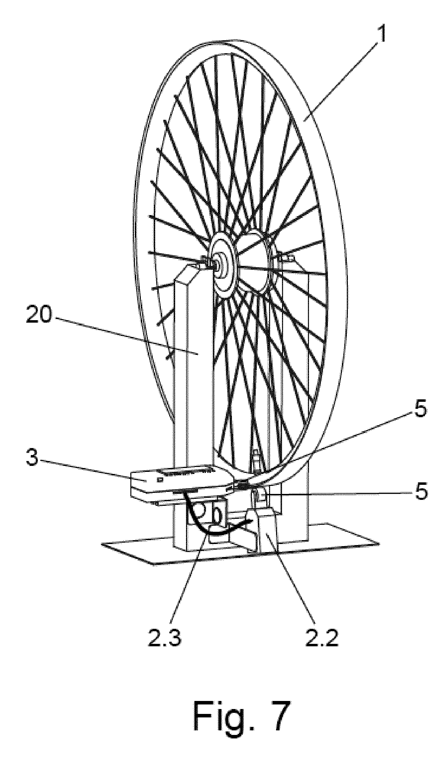

Under the same conditions, the aligning device can also be used for measuring the roundness of a wheel (1), arranging it in a radial position with the disk (5) supported on the periphery of the rim of the wheel (1) to be checked; there being envisaged, in that sense, a combination of the aligning device and an accessory device (22) having a similar operation, arranging one of them in a perpendicular manner in relation to one side of the rim of the wheel (1) and the other in a radial position on the periphery of the rim, as shown in Figure 7, whereby obtaining in one and the same operation a simultaneous measurement of the lateral deviations and the roundness of the rim on which the check is performed. The accessory device (22) can be connected with the main aligning device by means of a cable (23) or any other communication means for jointly processing the data provided by both devices.

## Claims

1. A spoked wheel aligner for determining lateral misalignments on a wheel (1) of application, indicating same with signals and graphics which allow tracking the progress of alignment, **characterized in that** it comprises a box body (3) containing a longitudinally mobile rod (4) which protrudes outside said body, said rod (4) incorporating at the end a disk (5) having a system for detecting the angular position thereof, while the rod (4) has a system for detecting the position of the longitudinal movement thereof, all of this linked through an electronic module (14) with operating procedure indication and control means.

2. The spoked wheel aligner according to claim 1, **characterized in that** the rod (4) is pushed by a spring (8) that tends to move it out of the box body (3), having a stop limiting movement **in that** direction.

3. The spoked wheel aligner according to claim 1, **characterized in that** the system for detecting the angular position of the disk (5) comprises a distribution of magnets (6) arranged in the circumferential contour of said disk (5), in relation to magnetic sensors (7) which are arranged in the rod (4).

4. The spoked wheel aligner according to claim 1, **characterized in that** the system for detecting the position of longitudinal movement of the rod (4) comprises a magnet (9) arranged in the rear part of the rod (4), in a position facing a magnetic field sensor (10) securely located in the box body (3).

5. The spoked wheel aligner according to claim 1, **characterized in that** the operating procedure indication and control means are arranged on a display screen (11).

6. The spoked wheel aligner according to claim 1, **characterized in that** the operating procedure indication means are luminous markers (12) which are arranged on the outside of the box body (3).

7. The spoked wheel aligner according to claim 1, **characterized in that** the operating procedure control means are command buttons (13) which are arranged on the outside of the box body (3).

8. The spoked wheel aligner according to claim 1, **characterized in that** the electronic module (14) incorporates an application for establishing communication with a computer program run in an external system.

9. The spoked wheel aligner according to claim 1, **characterized in that** the box body (3) contains laser emitters (17), which emit light beams (18) that are projected outwards through both sides of the rod (4) on a plane parallel to the disk (5).

10. The spoked wheel aligner according to claim 1, **characterized in that** the box body (3) contains a battery (15) for supplying power to the functional assembly.

11. The spoked wheel aligner according to claim 1, **characterized in that** it has a connector (16) for the functional connection with an external power supply.

12. The spoked wheel aligner according to claim 1, **characterized in that** the box body (3) has formations (19) for fastening on a support (20, 21) in relation to the spoked wheel (1) to be aligned.

13. The spoked wheel aligner according to claim 1, **characterized in that** an accessory device (22) having a similar operation is connected in relation to the electronic module (14), forming an assembly which can be arranged at the same time in two perpendicular positions with respect to the rim of the wheel (1) of application.

14. A method for aligning spoked wheels with the aligner of the preceding claims, by means of contact on one side of the wheel (1) to be aligned, in combination with the rotation thereof, **characterized in that** it comprises the phases of:
- collecting data of the circumferential contour of the wheel (1) by means of a contact sensor that runs along the side of the wheel (1) during rotation thereof,
- analyzing the data provided by the contact sensor as it moves on the side of the wheel (1),
- determining the areas or points of the circumferential contour of the wheel (1) having misalignment, according to the data provided by the contact sensor,
- assessing the degree of misalignment of the areas or points having misalignment,
- indicating the areas or points the misalignment of which exceeds established ranges,
- correcting the indicated misalignments until the entire circumferential contour of the wheel (1) is comprised within the established ranges of misalignment.

15. The method for aligning spoked wheels according to claim 14, **characterized in that** an accessory device (22) having a similar operation is arranged in combination with the aligner, one being arranged in a perpendicular position with respect to one side of the rim of the wheel (1) of application and the other being arranged in a radial position on the periphery of the rim, in order to measure at the same time the lateral deviations and the roundness of the wheel (1).
